# EUROPÄISCHE PATENTSCHRIFT

(11) **EP 1 954 097 B1**
(45) Veröffentlichungstag und Bekanntmachung des Hinweises auf die Patenterteilung: **27.04.2011**
(21) Anmeldenummer: 08001038.2
(22) Anmeldetag: 21.01.2008
(51) Int. Cl.: H05B 6/12

(54) **Verfahren zum Aufbau eines Induktionskochfeldes und Induktionskochfeld**
Method for creating an induction cooker and induction cooker
Procédé destiné au montage d'un champ de cuisson à induction et champ de cuisson à induction

(30) Priorität: 31.01.2007 DE 102007006280
(43) Veröffentlichungstag der Anmeldung: 06.08.2008
(73) Patentinhaber: E.G.O. ELEKTRO-GERÄTEBAU GmbH, 75038 Oberderdingen (DE)
(72) Erfinder: Haag, Thomas, 68794 Oberhausen-Rheinhausen (DE)
(74) Vertreter: Renger, Florian

(56) Entgegenhaltungen:
- EP-A- 0 412 875
- DE-A1-102005 005 527
- FR-A- 2 334 918
- FR-A- 2 635 852

## Beschreibung

Die Erfindung betrifft ein Verfahren zum Aufbau eines Induktionskochfelds gemäß dem Oberbegriff des Anspruchs 1 sowie ein Induktionskochfeld gemäß dem Oberbegriff des Anspruchs 10, das insbesondere nach einem derartigen Verfahren aufgebaut ist.

Oftmals sind bei einem Induktionskochfeld eine bzw. mehrere Öffnungen oder Aussparungen in einem Induktortragblech vorgesehen, und zwar üblicherweise zentral bzw. mittig im Tragblech. Durch diese werden auf dem Induktortragblech angeordnete Induktoren mittels Anschlusskabeln mit einer Steuerung unter dem Induktortragblech verbunden. Für den Fall, dass die Induktoren auf der Auflageseite liegen und von dieser Seite aus ein Anschluss an eine Steuerung und/oder Leistungselektronik erfolgt, kann es bei bestimmten Verteilungen der Induktoren vorkommen, dass eine oder mehrere Öffnungen durch einen Induktor zumindest teilweise verdeckt werden. Dies bedeutet, dass der Induktor dann zuerst elektrisch angeschlossen werden muss, bevor er auf das Induktortragblech aufgelegt und befestigt werden kann. Bereits dies ist aufwendig. Des Weiteren kann es sein, dass eine Öffnung von manchen Induktoren relativ weit entfernt liegt, was bedeutet, dass diese ein relativ langes Anschlusskabel benötigen. Wird ein derartiger Induktortyp jedoch erheblich näher an der Öffnung angeordnet, so ist ein solches langes Anschlusskabel nicht nur unnötig, sondern bedeutet zusätzlichen Aufwand bei der Montage, weit es verstaut werden muss und es eventuell stört bzw. hinderlich ist.

Die FR-A-2334918 zeigt ein Kochfeld mit Kontaktkochplatten aus Gusseisen, die einzeln in ein Tragblech eingesetzt sind mit einem weiteren Tragblech darunter. Anschlusskabel von Anschlüssen gehen von den einzelnen Kontaktkochplatten unten ab und laufen in einen Anschlussraum, von wo aus sie durch eine weitere Öffnung zu einer Energieversorgung odgl. nach draußen gehen. Die einzigen Anschlussvorrichtungen sind hier direkt an den Heizungen vorgesehen.

### Aufgabe und Lösung

Der Erfindung liegt die Aufgabe zugrunde, ein eingangs genanntes Verfahren sowie ein eingangs genanntes Induktionskochfeld zu schaffen, mit denen Probleme des Standes der Technik vermieden werden können und insbesondere auf einfache Art und Weise eine effiziente und sinnvolle Montage sowie ein effizient aufgebautes Induktionskochfeld geschaffen werden können.

Gelöst wird diese Aufgabe durch ein Verfahren mit den Merkmalen des Anspruchs 1 sowie ein Induktionskochfeld mit den Merkmalen des Anspruchs 10. Vorteilhafte sowie bevorzugte Ausgestaltungen der Erfindung sind Gegenstand der weiteren Ansprüche und werden im Folgenden näher erläutert. Manche der nachfolgend angeführten Merkmale werden nur für das Verfahren oder nur für das Induktionskochfeld angeführt. Sie können jedoch unabhängig davon sowohl für das Verfahren als auch für das Induktionskochfeld gelten.

Ein Induktionskochfeld wird aufgebaut mit einem Induktortragblech, auf dem mindestens zwei Induktoren angeordnet werden. Unter dem Induktortragblech wird eine Aufnahme für eine Steuerung bzw. Leistungselektronik angeordnet bzw. befestigt. Die Induktoren sind durch eine Öffnung oder Aussparung im Induktortragblech über Anschlusskabel mit der Steuerung bzw. Leistungselektronik verbunden. Erfindungsgemäß wird bei Herstellung der Öffnung oder Aussparung bzw. bei der Fertigung des Induktortragblechs, ausgehend von einer vorgegebenen Lage der Induktoren darauf, die Position der Öffnung oder Aussparung so bestimmt, dass sie in etwa mittig in einem Zwischenraum zwischen den Induktoren liegt. Dies bedeutet, dass die Entfernung der Induktoren zu der Öffnung jeweils in etwa gleich ist bzw. nicht allzu unterschiedlich ist. So können beispielsweise Induktoren jeweils ähnlich lange Anschlusskabel aufweisen, was deren notwendige Typenvielfalt verringert. Des Weiteren kann vermieden werden, dass ein Induktor in erheblichem Maß über die Öffnung übersteht und diese verdeckt. Vorteilhaft ist die Öffnung nach oben völlig frei.

In vorteilhafter Ausgestaltung ist die Erfindung ebenso anwendbar, wenn eine Öffnung oder Aussparung durch einen oder mehrere Trennstege oder ähnliches in zwei oder mehr Teilöffnungen oder Teilaussparungen aufgeteilt wird und die entstehenden Teilöffnungen räumlich nahe beieinander liegen und damit den Zweck eines Kabeldurchtritts an einer gemeinsamen Stelle oder in einem gemeinsamen Bereich erfüllen. In der weiteren Erläuterung wird somit sozusagen von einer Öffnung oder Aussparung gesprochen, auch wenn es sich um sozusagen mehrere durch Stege oder ähnliches getrennte Öffnungen oder Aussparungen handelt.

Somit ist zwar im Rahmen der Erfindung vorzusehen, dass Induktortragbleche jeweils auf eine bestimmte Verteilung der Induktoren hin angepasst bzw. speziell gefertigt werden müssen, zumindest was die Öffnung oder Aussparung betrifft. Dieser Aufwand ist jedoch relativ gering und kann beispielsweise bei einem Induktortragblech aus Blech durch einmaliges Ändern oder Versetzen eines Stanzwerkzeuges erreicht werden. Dafür kann nachher bei jedem einzelnen Montagevorgang der Induktionskochfelder Zeit gespart werden und die Fehlerwahrscheinlichkeit gesenkt werden.

Zur Bestimmung der Lage der Öffnung oder Aussparung im Induktortragblech gibt es mehrere Möglichkeiten. Einerseits kann die Öffnung bzw. ihr Mittelpunkt in den Schwerpunkt eines von den Mittelpunkten der Induktoren gebildeten Mehrecks gelegt werden. Dies ist beispielsweise dann von Vorteil, wenn die Anschlusskabel der Induktoren von deren Mittelpunkt abgehen. Alternativ dazu kann die Öffnung so gelegt werden, dass sie bzw. ihr Mittelpunkt einen etwa gleichen Abstand zu sämtlichen Induktoren aufweist. Insbesondere wird ein solcher Abstand zwischen einem Rand der Öffnung und einem Außenrand der Induktoren gemessen. Dies ist beispielsweise dann von Vorteil, wenn die Anschlusskabel seitlich von den Induktoren abgehen und sich ihre Länge auf diesen abgehenden Abschnitt bezieht. Somit müssen die Anschlusskabel jeweils eine etwa gleiche Strecke überbrücken zu der Öffnung hin bzw. zu einem Anschluss an die Steuerung und/oder die Leistungselektronik.

Vorteilhaft ist vorgesehen, dass die Öffnung nach oben frei bleibt bzw. sämtliche Induktoren einen Abstand von mindestens wenigen mm zum Rand der Öffnung oder der Teilöffnungen aufweisen.

Aus geometrischen Überlegungen her ist klar, dass beispielsweise bei vier oder mehr Induktoren, die jeweils auch noch eine unterschiedliche Größe aufweisen können und deren Verteilung unter anderen Gesichtspunkten erfolgt als die Anordnung einer Öffnung für das Durchführen der Anschlusskabel, diese Öffnung kaum einen gleichen Abstand zu sämtlichen Induktoren haben kann. Üblicherweise werden bei Design solcher Kochfelder von einer Kochfeldgröße ausgehend die einzelnen Induktoren festgelegt hinsichtlich Größe und Lage. Ein jeweils immer gleicher Abstand ist zumindest dann nicht immer möglich, wenn die Öffnung eine geometrische Grundform wie Rechteck, Quadrat oder Kreis aufweist. Entweder kann hier die Öffnung von einer solchen Grundform abweichen, beilspielsweise länglich in eine Richtung zu einem am weitesten entfernten Induktor hin sein. Alternativ kann in einem gewissen Maß in Kauf genommen werden, dass der Abstand mancher Induktoren zu der Öffnung etwas größer ist. Es wird hier jedoch besonders vorteilhaft ein Ausgleich vorgenommen, damit letztendlich sämtliche Abstände nicht zu weit auseinanderliegen und möglichst viele Abstände möglichst ähnlich groß sind, vor allem bei gleichen Typen von Induktoren.

Die Steuerung und/oder Leistungselektronik in der Aufnahme, die an der Unterseite des Induktortragblechs befestigt wird, weist erfindungsgemäß Anschlussvorrichtungen für die Induktoren bzw. Induktionsspulen und für deren Anschlusskabel auf. Diese Anschlussvorrichtungen können besonders bevorzugt Klemmen oder Steckverbindungen sein. Hier werden entweder die Steuerung und/oder die Leistungselektronik für sich oder aber diese zusammen mit der Aufnahme derart unter dem Induktortragblech positioniert oder diese Position festgelegt, dass die Anschlussvorrichtungen unterhalb der Öffnung im Induktortragblech liegen, vorteilhaft sogar im Wesentlichen zentrisch dazu. Hier ist es auch möglich, wenn Steuerung und/oder Leistungselektronik auf einem Träger wie einer Platine angeordnet sind, auf der auch die Anschlussvorrichtungen sitzen, die Position der Anschlussvorrichtungen auf diesem Träger entsprechend zu variieren. In weiterer Ausgestaltung der Erfindung sind die Anschlussvorrichtungen so verteilt bzw. unter der Öffnung angeordnet und auch die Größe der Öffnung so gewählt, dass die Anschlussvorrichtungen sämtlich gut erreicht werden können bzw. ihre flächige Verteilung nicht größer ist als die Öffnung.

In Ausgestaltung der Erfindung können die Induktoren dauerhaft an dem Induktortragblech befestigt werden, beispielsweise lösbar durch Anschrauben oder unlösbar durch eine Klebeverbindung. Vorteilhaft werden die Induktoren zuerst auf dem Induktortragblech befestigt und anschließend elektrisch angeschlossen. Deswegen ist die vorgenannte gute Erreichbarkeit der Anschlussvorrichtungen für die Anschlusskabel durch die Öffnung hindurch von großem Vorteil.

Ein erfindungsgemäßes Induktionskochfeld kann beispielsweise gemäß einem vorbeschriebenen Verfahren aufgebaut werden, wobei dies nicht zwingend sein muss. Zusätzlich zu dem vorbeschriebenen mechanischen bzw. konstruktiven Aufbau ist hier eben von Bedeutung, dass die Position der Öffnung oder Aussparung im Induktortragblech, durch welches die darauf angeordneten Induktoren mittels Anschlusskabeln mit einer Steuerung und/oder Leistungselektronik unter dem Induktortragblech verbunden werden, in etwa mittig bzw. zentral in einem Zwischenraum zwischen den Induktoren ist. Dabei können sich Position und/oder Größe sowie Ausgestaltung der Öffnung entweder an Mittelpunkten bzw. Schwerpunkten der Induktoren orientieren oder an deren Außenrand bzw. Außenkontur.

Während das Induktortragblech aus Blech, beispielsweise Aluminiumblech, bestehen kann, besteht die Aufnahme vorteilhaft aus Kunststoff. Sie kann eine flache Wanne sein und beispielsweise die gleiche Grundform besitzen wie das Induktortragblech selber, insbesondere sogar mit etwa gleichen Seitenlängenverhältnissen. Vorteilhaft ist in Ausgestaltung der Erfindung vorgesehen, dass die Aufnahme so an dem Induktortragblech angeordnet wird, dass die Öffnung etwa über ihrem Mittelpunkt bzw. Schwerpunkt liegt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schrägansicht eines erfindungsgemäß aufgebauten Induktionskochfelds mit gestrichelt dargestellten Einrichtungen unter einem Induktortragblech,
- Fig. 2: eine Abwandlung eines erfindungsgemäß aufgebauten Induktionskochfelds ähnlich Fig. 1 mit vier Induktoren,
- Fig. 3: eine schematische Draufsicht auf eine Abwandlung eines Induktionskochfelds ähnlich Fig. 2 und
- Fig. 4: eine weitere Abwandlung eines Induktionskochfelds ähnlich Fig. 3.

### Detaillierte Beschreibung der Ausführungsbeispiele

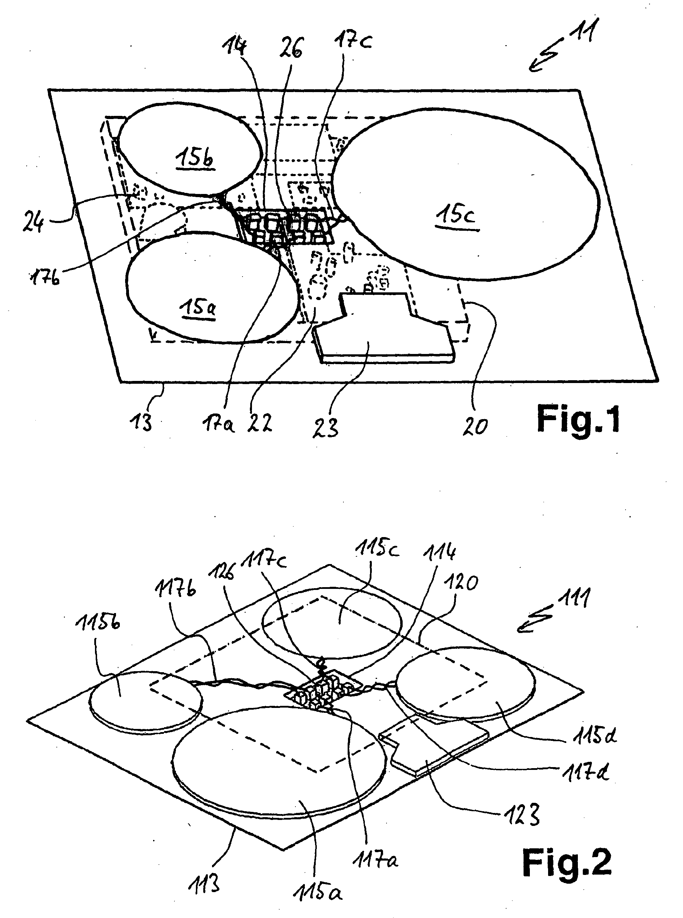

In Fig. 1 ist ein erfindungsgemäß aufgebautes Induktionskochfeld 11 dargestellt, wie es betriebsfertig ist, wenn noch eine Glaskeramikplatte odgl. oben aufgesetzt wäre. Das Induktionskochfeld 11 weist ein Induktortragblech 13 auf, welches im Wesentlichen die Fläche des Induktionskochfelds 11 definiert. Auf dem Induktortragblech 13 sind drei unterschiedlich große Induktoren 15a, 15b und 15c verteilt. In einem Bereich zwischen den Induktoren 15a-c weist das Induktortragblech 13 eine rechteckige Öffnung 14 auf. Es ist zu sehen, dass die Öffnung 14 zu den Außenrändern der Induktoren 15a-c einen jeweils ähnlichen Abstand aufweist, insbesondere wenige Zentimeter.

Unter dem Induktortragblech 13 ist eine Aufnahme 20 gestrichelt dargestellt, welche nach Art eines flachen Kastens bzw. nach Art einer Wanne ausgebildet ist und beispielsweise aus Kunststoff besteht. In der Aufnahme 20 ist unter dem Induktortragblech 13 eine kurz-gestrichelt dargestellte Steuerung 22 angeordnet mit entsprechender Leiterplatte und kurz-gestrichelt dargestellten Bauteilen darauf. Oberhalb der Steuerung 22 befindet sich im vorderen mittleren Bereich des Induktionskochfelds 11 eine Bedienungseinrichtung 23, welche beispielsweise mit der Steuerung 22 verbundene Berührungsschalter sowie Anzeigen odgl. aufweist. Die Bedienungseinrichtung 23 liegt auf dem Induktortragblech 13 auf.

Des Weiteren befindet sich in der Aufnahme 20 eine Leistungselektronik 24, die links hinten beispielhaft kurz-gestrichelt dargestellt ist und vorteilhaft auf einer anderen Leiterplatte angeordnet ist als die Steuerung 22. Die Leistungselektronik 24 ist wie üblich für derartige Induktoren 15 bzw. Induktionskochfelder 11 ausgebildet. Für die drei Induktoren 15a-c können auch mehrere Leistungselektroniken bzw. jeweils eine auf einem unterschiedlichen Träger vorgesehen sein.

Unter der Öffnung 14 sichtbar sind Anschlussklemmen 26 angeordnet, an welche Anschlusskabel 17a-c der Induktoren 15a-c angeschlossen werden. Die Anschlussklemmen 26 können beispielsweise auf der gleichen Leiterplatte sitzen wie die Steuerung 22 oder die Leistungselektronik 24. Die Anschlussklemmen 26 sind gemäß üblicher Bauart ausgebildet und können beispielsweise Schraubklemmen sein. Die von den Induktoren 15a-c abgehenden Anschlusskabel 17a-c werden an freigelegten Enden mit den Anschlussklemmen 26 an die Steuerung 22 und/oder die Leistungselektronik 24 angeschlossen.

Es ist aus Fig. 1 zu erkennen, dass die Länge aller drei Anschlusskabel 17a-c in etwa gleich ist, zumindest von dem Außenrand der Induktoren aus gemessen. Hier ist es auch offensichtlich, dass bei drei Induktoren je nach eingangs genannter Messmethode, also entweder Abstand zum Außenrand oder Abstand zu einem Mittelpunkt eines Induktors, ein einziger dazwischenliegender Punkt oder Bereich existiert. Dies kann bei vier Induktoren anders sein.

In Fig. 2 ist eine alternative Ausgestaltung eines erfindungsgemäß aufgebauten Induktionskochfelds 111 dargestellt, welches wiederum auf einem Induktortragblech 113 Induktoren aufweist, und zwar vier Induktoren 115a-d. Des Weiteren befindet sich unter dem Induktortragblech 113 wiederum eine Aufnahme 120, wobei diesmal Steuerung und Leistungselektronik nicht dargestellt sind. Im vorderen mittleren Bereich liegt auf dem Induktortragblech 113 eine Bedienungseinrichtung 123 auf.

In einem Zwischenbereich zwischen den Induktoren 115a-d ist eine Öffnung 114 im Induktortragblech 113 vorgesehen, welche wiederum ähnlich Fig. 1 rechteckig ausgebildet ist. Unter der Öffnung 114 sind Anschlussklemmen 126 zu erkennen, zu welchen Anschlusskabel 117a-d der Induktoren 115a-d geführt und mit diesen verbunden sind.

Da offensichtlich ist, dass nur in sehr wenigen Fällen bei vier Induktoren ein genau zwischen diesen liegender Punkt existiert, wird gemäß Fig. 2 die Lage der Öffnung 114 im Induktortragblech 113 so gewählt, dass sie zumindest von den drei Induktoren 115a, c und d bzw. deren Außenrand einen etwa gleichen Abstand aufweist. Somit können also auch die Anschlusskabel 117a, c und d in etwa gleich lang sein. Der linke hintere Induktor 115b dagegen weist ein erheblich längeres Anschlusskabel 117b auf und liegt auch erheblich weiter weg von der Öffnung 114. Dies könnte dadurch vermieden werden, dass sich die Öffnung 114 sehr weit in Richtung auf den Induktor 115b zu erstreckt und die zugehörigen Anschlussklemmen 126 auch, so dass auch das Anschlusskabel 117b die gleiche Länge aufweist wie die anderen Anschlusskabel. Alternativ dazu ist hier jedoch der Gesichtspunkt der Erfindung dargestellt, dass gleich große Induktoren, welche dann üblicherweise gleiche Bauart aufweisen bzw. vom selben Typ sind, wie hier die Induktoren 115c und 115d, auch gleichen Abstand zu der Öffnung 114 aufweisen und somit gleich lange Anschlusskabel 117c und 117d aufweisen.

Gemäß einer nochmals weiteren Alternative für einen erfindungsgemäßen Aufbau eines Induktionskochfelds könnte die Öffnung 114 soweit zu dem Induktor 115b hin verschoben werden, dass sie genau zwischen den Induktoren 115b und 115d liegt sowie dabei auch gleichzeitig zwischen den Induktoren 115a und 115c. Dann jedoch müssten entweder die gleichen Anschlusskabel 117c und 117d des gleichen Typs von Induktor 115 unterschiedlich lang sein oder aber ihre überflüssige Länge durch die Öffnung 114 hindurch unter dem Induktortragblech 113 verstaut werden.

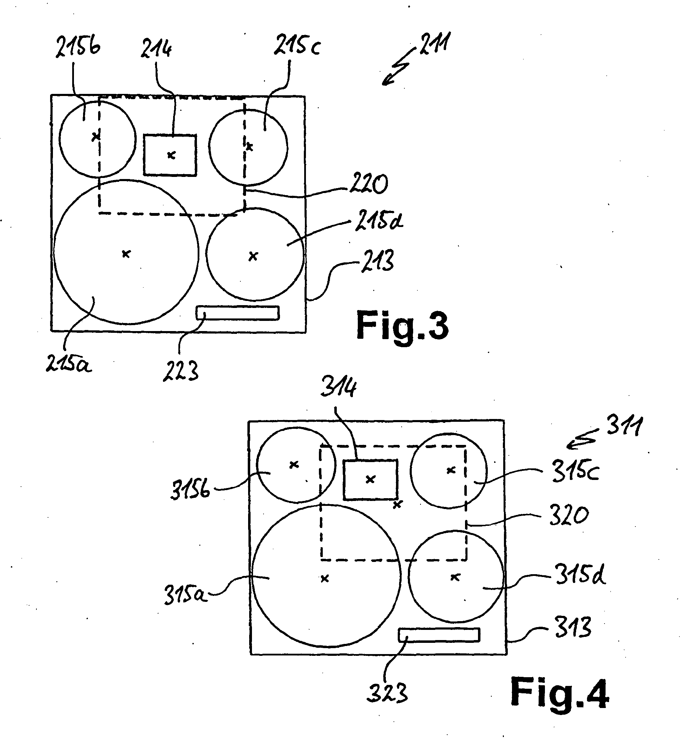

Ein nochmals weiteres erfindungsgemäß aufgebautes Induktionskochfeld 211 ist in Fig. 3 dargestellt, und zwar in Draufsicht von oben. Hier sind wiederum vier Induktoren 215a-d auf einem Induktortragblech 213 dargestellt, ebenso wie vorne rechts eine aufliegende Bedienungseinrichtung 223. Das Induktortragblech 213 weist eine rechteckige Öffnung 214 auf. Unter dem Induktortragblech 213, und zwar zentrisch zu der Öffnung 214, befindet sich eine Aufnahme 220 entsprechend derjenigen aus Fig. 1 für eine nicht dargestellte Steuerung und Leistungselektronik.

Bei dem Ausführungsbeispiel gemäß Fig. 3 ist zu sehen, dass sowohl die Öffnung 214 als auch die Aufnahme 220 relativ weit hinten am Induktionskochfeld 211 bzw. am Induktortragblech 213 vorgesehen sein können. Dies weicht also von einer jeweils zentrischen Anordnung zueinander ähnlich Fig. 2 ab.

In Fig. 3 ist auch dargestellt, wie die Öffnung 214 zu drei Induktoren, nämlich den Induktoren 215a-c, etwa gleichen Abstand aufweist. Vor allem aber ist wiederum der Abstand zu den beiden gleich ausgebildeten Induktoren 215b und 215c gleich, so dass diese mit gleich langen Anschlusskabeln 217b und 217c versehen sein können. Bei den Induktoren 215, der Öffnung 214 und der Aufnahme 220 sind durch ein kleines Kreuz jeweils die Mittelpunkte markiert.

In Fig. 4 ist eine weitere Abwandlung eines Induktionskochfelds 311 ähnlich Fig. 3 dargestellt. Im Vergleich zu Fig. 3 sind Art und Lage der Induktoren 315a-d auf dem Induktortragblech 313 sowie auch der Bedienungseinrichtung 323 und der Öffnung 314 gleich wie bei Fig. 3. Lediglich die Position der Aufnahme 320 unter dem Induktortragblech 313 hat sich, wie aus der strichlierten Darstellung zu ersehen ist, gegenüber Fig. 3 geändert. Damit ist also die Aufnahme 320 nicht zentrisch zu der Öffnung 314, was an den unterschiedlich liegenden Kreuzen für die Mittelpunkte zu sehen ist. Dies bedeutet also, dass sich bei Design von Steuerung, Leistungselektronik sowie auch der Anschlussklemmen etwas geändert hat zwischen den Fig. 3 und 4. Dies ermöglicht es jedoch, die Aufnahme 320 nicht ganz weit hinten am hinteren Rand des Induktionskochfelds 311 zu platzieren, sondern weiter zur Mitte hin.

Ein erfindungsgemäßes Induktionskochfeld 11 gemäß Fig. 1 kann beispielsweise dadurch aufgebaut werden, dass in der Aufnahme 20 Steuerung 22, Leistungselektronik 24 und Anschlussklemmen 26 angeordnet und gegebenenfalls befestigt werden. Anschließend wird die Aufnahme 20 unter dem Induktortragblech 13 angesetzt und befestigt. Dann werden die Induktoren 15a-c auf das Induktortragblech 13 aufgelegt sowie daran befestigt, beispielsweise festgeklebt, und mittels ihrer Anschlusskabel 17a-c an die Anschlussklemmen 26 angeschlossen. Danach wird die Bedienungseinrichtung 23 an die Steuerung 22 angeschlossen, beispielsweise ebenfalls über ein hier nicht dargestelltes Kabel, welches gleich wie die Anschlusskabel 17 durch die Öffnung 14 laufen und an eine Steckeinrichtung odgl. gehen kann. Anschließend wird noch die Bedienungseinrichtung 23 auf das Induktortragblech 13 aufgesetzt und befestigt und dann kann eine Kochfeldplatte aus Glaskeramik darauf angeordnet und fixiert werden.

## Patentansprüche

1. Verfahren zum Aufbau eines Induktionskochfelds (11, 111, 211, 311), wobei das Induktionskochfeld ein Induktortragblech (13, 113, 213, 313), mindestens zwei darauf angeordnete Induktoren (15, 115, 215, 315) und eine darunter angeordnete Aufnahme (20, 120, 220, 320) für eine Steuerung (22) und/oder eine Leistungselektronik (24) aufweist, wobei die Induktoren (15, 115, 215, 315) durch eine Öffnung (14, 114, 214, 314) oder Aussparung im Induktortragblech (13, 113, 213, 313) mittels Anschlusskabeln (17, 117) mit der Steuerung (22) und/oder der Leistungselektronik (24) verbunden sind, wobei ausgehend von einer vorgegebenen Lage der Induktoren (15, 115, 215, 315) auf dem Induktortragblech (13, 113, 213, 313) die Position der Öffnung (14, 114, 214, 314) in etwa mittig in einem Zwischenraum zwischen den Induktoren bestimmt wird, **dadurch gekennzeichnet, dass** die Steuerung (22) und/oder die Leistungselektronik (24) in der Aufnahme (20, 120, 220, 320) Anschlussvorrichtungen (26, 126) für die Induktoren (15, 115, 215, 315) bzw. deren Anschlusskabel (17, 117) aufweisen, wobei die Steuerung (22) und/oder die Leistungselektronik (24) so unter dem Induktortragblech (13, 113, 213, 313) verschoben sind, dass die Anschlussvorrichtungen (26, 126) unterhalb der Öffnung (14, 114, 214, 314) im Induktortragblech (13, 113, 213, 313) liegen.

2. Verfahren nach Anspruch 1, **dadurch gekennzeichnet, dass** die Öffnung (14, 114, 214) bzw. ihr Mittelpunkt in den Schwerpunkt eines von den Mittelpunkten der Induktoren (15, 115, 215) gebildeten Mehrecks gelegt wird.

3. Verfahren nach Anspruch 1, **dadurch gekennzeichnet, dass** die Öffnung (14, 114, 214, 314) bzw. ihr Mittelpunkt einen etwa gleichen Abstand zu sämtlichen Induktoren (15, 115, 215, 315) aufweist, insbesondere ein Rand der Öffnung zu einem Rand der Induktoren (15, 115, 215, 315).

4. Verfahren nach einem der vorhergehenden Ansprüche, **dadurch gekennzeichnet, dass** jeder der Induktoren (15, 115, 215, 315) einen Abstand zu dem Rand der Öffnung (14, 114, 214, 314) aufweist, insbesondere zumindest wenige mm oder cm.

5. Verfahren nach einem der vorhergehenden Ansprüche, **dadurch gekennzeichnet, dass** die Steuerung (22) und/oder die Leistungselektronik (24) zusammen mit der Aufnahme (20, 120, 220, 320) so unter dem Induktortragblech (13, 113, 213, 313) verschoben werden, dass die Anschlussvorrichtungen (26, 126) unterhalb der Öffnung (14, 114, 214, 314) im Induktortragblech (13, 113, 213, 313) liegen.

6. Verfahren nach Anspruch 1, **dadurch gekennzeichnet, dass** die Ausdehnung bzw. flächige Verteilung der Anschlussvorrichtungen (26, 126) maximal gleich groß ist wie die Ausdehnung der Öffnung (14, 114, 214, 314), insbesondere kleiner.

7. Verfahren nach Anspruch 1 oder 6, **dadurch gekennzeichnet, dass** die Anschlussvorrichtungen (26, 126) im Wesentlichen zentrisch zu der Aufnahme (20, 120, 220, 320) angeordnet sind.

8. Verfahren nach einem der vorhergehenden Ansprüche, **dadurch gekennzeichnet, dass** die Aufnahme (20, 120, 220, 320) im Wesentlichen zentrisch zu der Öffnung (14, 114, 214, 314) ist.

9. Verfahren nach einem der vorhergehenden Ansprüche, **dadurch gekennzeichnet, dass** die Induktoren (15, 115, 215, 315) dauerhaft an dem Induktortragblech (13, 113, 213, 313) befestigt werden, insbesondere angeklebt oder angeschraubt werden, wobei vorzugsweise danach die Induktoren (15, 115, 215, 315) elektrisch angeschlossen werden.

10. Induktionskochfeld (11, 111, 211, 311), insbesondere aufgebaut nach einem Verfahren gemäß einem der vorhergehenden Ansprüche, wobei das Induktionskochfeld (11, 111, 211, 311) ein Induktortragblech (13, 113, 213, 313), mindestens zwei darauf angeordnete Induktoren (15, 115, 215, 315) und eine darunter angeordnete Aufnahme (20, 120, 220, 320) für eine Steuerung (22) und/oder eine Leistungselektronik (24) aufweist, wobei die Induktoren (15, 115, 215, 315) durch eine Öffnung (14, 114, 214, 314) oder Aussparung im Induktortragblech (13, 113, 213, 313) mittels Anschlusskabeln (26, 126) mit der Steuerung (22) und/oder der Leistungselektronik (24) verbunden sind, wobei die Position der Öffnung (14, 114, 214, 314) in etwa mittig in einem Zwischenraum zwischen den Induktoren (15, 115, 215, 315) ist, **dadurch gekennzeichnet, dass** die Steuerung (22) und/oder die Leistungselektronik (24) in der Aufnahme (20, 120, 220, 320) Anschlussvorrichtungen (26, 126) für die Induktoren (15, 115, 215, 315) bzw. deren Anschlusskabel (17, 117) aufweisen, wobei die Anschlussvorrichtungen (26, 126) unterhalb der Öffnung (14, 114, 214, 314) im Induktortragblech (13, 113, 213, 313) liegen.

11. Induktionskochfeld nach Anspruch 10, **dadurch gekennzeichnet, dass** die Öffnung (14, 114, 214) bzw. ihr Mittelpunkt im Schwerpunkt eines von den Mittelpunkten der Induktoren (15, 115, 215) gebildeten Mehrecks liegt.

12. Induktionskochfeld nach Anspruch 10, **dadurch gekennzeichnet, dass** die Öffnung (14, 114, 214, 314) bzw. ihr Mittelpunkt einen in etwa gleichen Abstand zu sämtlichen Induktoren (15, 115, 215, 315) aufweist, insbesondere ein Rand der Öffnung (14, 114, 214, 314) zu einem Rand der Induktoren.

13. Induktionskochfeld nach einem der Ansprüche 10 bis 12, **dadurch gekennzeichnet, dass** jeder der Induktoren (15, 115, 215, 315) einen Abstand zu dem Rand der Öffnung (14, 114, 214, 314) aufweist, insbesondere einen Abstand von wenigen mm.

14. Induktionskochfeld nach Anspruch 10, **dadurch gekennzeichnet, dass** die Ausdehnung bzw. flächige Verteilung der Anschlussvorrichtungen (26, 126) maximal gleich groß ist wie die Öffnung (14, 114, 214, 314) selber, insbesondere kleiner.

15. Induktionskochfeld nach einem der Ansprüche 10 bis 14, **dadurch gekennzeichnet, dass** die Aufnahme (20, 120, 220, 320) im Wesentlichen zentrisch zu der Öffnung (14, 114, 214, 314) ist.

16. Induktionskochfeld nach einem der Ansprüche 10 bis 15, **dadurch gekennzeichnet, dass** die Aufnahme (20, 120, 220, 320) eine flache Wanne ist, insbesondere aus Kunststoff.

17. Induktionskochfeld nach einem der Ansprüche 10 bis 16, **dadurch gekennzeichnet, dass** die Anschlusskabel (17, 117) einiger, vorzugsweise aller, Induktoren (15, 115, 215, 315) in etwa gleich lang sind.

## Claims

1. Method for creating an induction cooker (11, 111, 211, 311), said induction cooker having an inductor support plate (13, 113, 213, 313), at least two inductors (15, 115, 215, 315) arranged thereon and a receptacle (20, 120, 220, 320) arranged thereunder for a control unit (22) and/or an electronic power unit (24), the inductors (15, 115, 215, 315) being connected to the control unit (22) and/or to the electronic power unit (24) through an opening (14, 114, 214, 314) or cutout in the inductor support plate (13, 113, 213, 313) by means of connecting cables (17, 117), where based on a given position of the inductors (15, 115, 215, 315) on the inductor support plate (13, 113, 213, 313) the position of the opening (14, 114, 214, 314) is determined approximately centrally in an intermediate space between the inductors, **characterized in that** the control unit (22) and/or the electronic power unit (24) in the receptacle (20, 120, 220, 320) have connecting devices (26, 126) for the inductors (15, 115, 215, 315) or for their connecting cables (17, 117), the control unit (22) and/or the electronic power unit (24) being displaced under the inductor support plate (13, 113, 213, 313) such that the connecting devices (26, 126) are underneath the opening (14, 114, 214, 314) in the inductor support plate (13, 113, 213, 313).

2. Method according to Claim 1, **characterized in that** the opening (14, 114, 214) or its centerpoint is placed in the main area of a polygon formed by the centerpoints of the inductors (15, 115, 215).

3. Method according to Claim 1, **characterized in that** the opening (14, 114, 214, 314) or its centerpoint is at an approximately equal distance from all inductors (15, 115, 215, 315), in particular an edge of the opening to an edge of the inductors (15, 115, 215, 315).

4. Method according to one of the preceding claims, **characterized in that** each of the inductors (15, 115, 215, 315) is at a distance from the edge of the opening (14, 114, 214, 314), in particular of at least a few millimeters or centimeters.

5. Method according to one of the preceding claims, **characterized in that** the control unit (22) and/or the electronic power unit (24) together with the receptacle (20, 120, 220, 320) underneath the inductor support plate (13, 113, 213, 313) are displaced such that the connecting devices (26, 126) are underneath the opening (14, 114, 214, 314) in the inductor support plate (13, 113, 213, 313).

6. Method according to Claim 1, **characterized in that** the extent or surface distribution of the connecting devices (26, 126) is at most of identical size to the extent of the opening (14, 114, 214, 314), in particular smaller.

7. Method according to Claim 1 or 6, **characterized in that** the connecting devices (26, 126) are arranged substantially centrally to the receptacle (20, 120, 220, 320).

8. Method according to one of the preceding claims, **characterized in that** the receptacle (20, 120, 220, 320) is substantially central to the opening (14, 114, 214, 314).

9. Method according to one of the preceding claims, **characterized in that** the inductors (15, 115, 215, 315) are fastened permanently to the inductor support plate (13, 113, 213, 313), in particular glued on or screwed on, said inductors (15, 115, 215, 315) being electrically connected preferably afterwards.

10. Induction cooker (11, 111, 211, 311), in particular constructed to a method in accordance with one of the preceding claims, said induction cooker (11, 111, 211, 311) having an inductor support plate (13, 113, 213, 313), at least two inductors (15, 115, 215, 315) arranged thereon and a receptacle (20, 120, 220, 320) arranged thereunder for a control unit (22) and/or an electronic power unit (24), the inductors (15, 115, 215, 315) being connected to the control unit (22) and/or to the electronic power unit (24) through an opening (14, 114, 214, 314) or cutout in the inductor support plate (13, 113, 213, 313) by means of connecting cables (26, 126), the position of the opening (14, 114, 214, 314) being approximately central in an intermediate space between the inductors (15, 115, 215, 315), **characterized in that** the control unit (22) and/or the electronic power unit (24) in the receptacle (20, 120, 220, 320) have connecting devices (26, 126) for the inductors (15, 115, 215, 315) or their connecting cables (17, 117), said connecting devices (26, 126) being underneath the opening (14, 114, 214, 314) in the inductor support plate (13, 113, 213, 313).

11. Induction cooker according to Claim 10, **characterized in that** the opening (14, 114, 214) or its centerpoint is in the main area of a polygon formed by the centerpoints of the inductors (15, 115, 215).

12. Induction cooker according to Claim 10, **characterized in that** the opening (14, 114, 214, 314) or its centerpoint is at an approximately identical distance from all inductors (15, 115, 215, 315), in particular an edge of the opening to an edge of the inductors.

13. Induction cooker according to one of Claims 10 to 12, **characterized in that** each of the inductors (15, 115, 215, 315) is at a distance from the edge of the opening (14, 114, 214, 314), in particular a distance of a few millimeters.

14. Induction cooker according to Claim 10, **characterized in that** the extent or surface distribution of the connecting devices (26, 126) is at most of identical size to the opening (14, 114, 214, 314) itself, in particular smaller.

15. Induction cooker according to one of Claims 10 to 14, **characterized in that** the receptacle (20, 120, 220, 320) is substantially central to the opening (14, 114, 214, 314).

16. Induction cooker according to one of Claims 10 to 15, **characterized in that** the receptacle (20, 120, 220, 320) is a flat trough, in particular made of plastic.

17. Induction cooker according to one of Claims 10 to 16, **characterized in that** the connecting cables (17, 117) of some, preferably all, inductors (15, 115, 215, 315) are of approximately equal length.

## Revendications

1. Procédé de montage d'une plaque de cuisson à induction (11, 111, 211, 311), sachant que la plaque de cuisson à induction présente une plaque porteuse d'inducteurs (13, 113, 213, 313), au moins deux inducteurs (15, 115, 215, 315) disposés sur celle-ci et un logement (20, 120, 220, 320) disposé au-dessous pour une commande (22) et/ou une électronique de puissance (24), que les inducteurs (15, 115, 215, 315) sont reliés à la commande (22) et/ou à l'électronique de puissance (24) au moyen de câbles de raccordement (17, 117) à travers une ouverture (14, 114, 214, 314) ou un évidement dans la plaque porteuse d'inducteurs (13, 113, 213, 313), qu'à partir d'une position prédéterminée des inducteurs (15, 115, 215, 315) sur la plaque porteuse d'inducteurs (13, 113, 213, 313) est déterminée la position de l'ouverture (14, 114, 214, 314) approximativement au centre d'un espace intermédiaire entre les inducteurs, **caractérisé en ce que** la commande (22) et/ou l'électronique de puissance (24) dans le logement (20, 120, 220, 320) présente(nt) des dispositifs de connexion (26, 126) pour les inducteurs (15, 115, 215, 315) ou leurs câbles de raccordement (17, 117), sachant que la commande (22) et/ou l'électronique de puissance (24) est (sont) décalée(s) de telle manière sous la plaque porteuse d'inducteurs (13, 113, 213, 313) que les dispositifs de connexion (26, 126) se trouvent au-dessous de l'ouverture (14, 114, 214, 314) pratiquée dans la plaque porteuse d'inducteurs (13, 113, 213, 313).

2. Procédé selon la revendication 1, **caractérisé en ce que** l'ouverture (14, 114, 214) ou son centre est placé(e) sur le centre de gravité d'un polygone formé par les points centraux des inducteurs (15, 115, 215).

3. Procédé selon la revendication 1, **caractérisé en ce que** l'ouverture (14, 114, 214, 314) ou son centre est approximativement équidistant(e) de l'ensemble des inducteurs (15, 115, 215, 315), en particulier d'un bord de l'ouverture à un bord des inducteurs (15, 115, 215, 315).

4. Procédé selon l'une des revendications précédentes, **caractérisé en ce que** chacun des inducteurs (15, 115, 215, 315) se trouve à distance du bord de l'ouverture (14, 114, 214, 314), en particulier à au moins quelques mm ou cm.

5. Procédé selon l'une des revendications précédentes, **caractérisé en ce que** la commande (22) et/ou l'électronique de puissance (24) et le logement (20, 120, 220, 320) sont décalés sous la plaque porteuse d'inducteurs (13, 113, 213, 313) de telle manière que les dispositifs de connexion (26, 126) se trouvent au-dessous de l'ouverture (14, 114, 214, 314) pratiquée dans la plaque porteuse d'inducteurs (13, 113, 213, 313).

6. Procédé selon la revendication 1, **caractérisé en ce que** l'étendue ou la répartition en surface des dispositifs de connexion (26, 126) est au maximum aussi grande que l'étendue de l'ouverture (14, 114, 214, 314), en particulier plus petite.

7. Procédé selon la revendication 1 ou 6, **caractérisé en ce que** les dispositifs de connexion (26, 126) sont disposés essentiellement de manière centrée par rapport au logement (20, 120, 220, 320).

8. Procédé selon l'une des revendications précédentes, **caractérisé en ce que** le logement (20, 120, 220, 320) est essentiellement centré par rapport à l'ouverture (14, 114, 214, 314).

9. Procédé selon l'une des revendications précédentes, **caractérisé en ce que** les inducteurs (15, 115, 215, 315) sont fixés durablement à la plaque porteuse d'inducteurs (13, 113, 213, 313), en particulier collés ou vissés, sachant que les inducteurs (15, 115, 215, 315) sont connectés électriquement de préférence par la suite.

10. Plaque de cuisson à induction (11, 111, 211, 311), en particulier montée conformément à un procédé selon l'une des revendications précédentes, sachant que la plaque de cuisson à induction présente une plaque porteuse d'inducteurs (13, 113, 213, 313), au moins deux inducteurs (15, 115, 215, 315) disposés sur celle-ci et un logement (20, 120, 220, 320) disposé au-dessous pour une commande (22) et/ou une électronique de puissance (24), que les inducteurs (15, 115, 215, 315) sont reliés à la commande (22) et/ou à l'électronique de puissance (24) à travers une ouverture (14, 114, 214, 314) ou un évidement dans la plaque porteuse d'inducteurs (13, 113, 213, 313), que l'ouverture (14, 114, 214, 314) est positionnée approximativement au centre d'un espace intermédiaire entre les inducteurs (15, 115, 215, 315), **caractérisée en ce que** la commande (22) et/ou l'électronique de puissance (24) dans le logement (20, 120, 220, 320) présente(nt) des dispositifs de connexion (26, 126) pour les inducteurs (15, 115, 215, 315) ou leurs câbles de raccordement (17, 117), sachant que les dispositifs de connexion (26, 126) se trouvent au-dessous de l'ouverture (14, 114, 214, 314) pratiquée dans la plaque porteuse d'inducteurs (13, 113, 213, 313).

11. Plaque de cuisson à induction selon la revendication 10, **caractérisée en ce que** l'ouverture (14, 114, 214) ou son centre se trouve sur le centre de gravité d'un polygone formé par les points centraux des inducteurs (15, 115,215).

12. Plaque de cuisson à induction selon la revendication 10, **caractérisée en ce que** l'ouverture (14, 114, 214, 314) ou son centre est approximativement équidistant(e) de l'ensemble des inducteurs (15, 115, 215, 315), en particulier d'un bord de l'ouverture à un bord des inducteurs.

13. Plaque de cuisson à induction selon l'une des revendications 10 à 12, **caractérisée en ce que** chacun des inducteurs (15, 115, 215, 315) se trouve à distance du bord de l'ouverture (14, 114, 214, 314), en particulier à quelques mm.

14. Plaque de cuisson à induction selon la revendication 10, **caractérisée en ce que** l'étendue ou la répartition en surface des dispositifs de connexion (26, 126) est au maximum aussi grande que l'étendue de l'ouverture (14, 114, 214, 314) elle-même, en particulier plus petite.

15. Plaque de cuisson à induction selon l'une des revendications 10 à 14, **caractérisée en ce que** le logement (20, 120, 220, 320) est essentiellement centré par rapport à l'ouverture (14, 114, 214, 314).

16. Plaque de cuisson à induction selon l'une des revendications 10 à 15, **caractérisée en ce que** le logement (20, 120, 220, 320) est une cuvette plate, en particulier en plastique.

17. Plaque de cuisson à induction selon l'une des revendications 10 à 16, **caractérisée en ce que** les câbles de raccordement (17, 117) de quelques inducteurs (15, 115, 215, 315), de préférence de tous les inducteurs, sont approximativement de même longueur.
